# EUROPEAN PATENT APPLICATION

(11) **EP 2 106 836 A1**
(43) Date of publication of application: **07.10.2009**
(21) Application number: 08425199.0
(22) Date of filing: 27.03.2008
(51) Int. Cl.: B01D 46/10, B01D 46/52

(54) **Filter cartrige, filter housing and filter assembly**

(71) Applicant: OFFICINE METALLURGICHE G. CORNAGLIA S.p.A., 10092 Beinasco (IT)
(72) Inventor: Cornaglia, Umberto, 10027 Moncalieri (TO) (IT); Rocca, Giorgio, 10131 Tornio (IT)
(74) Representative: Robba, Pierpaolo

(57) **Abstract**

The filter cartridge (5') according to the invention comprises a filtering element (1') made for instance of accordion-folded paper and defining, in the filter housing (7) in which it is inserted, an upstream chamber (17), where air yet to be filtered is contained, and a downstream chamber (18), where air already filtered is contained. The filtering element has an upstream face (13') arranged to face the upstream chamber (17), and a downstream face (15') arranged to face the downstream chamber (18). The upstream and downstream faces (13', 15') are substantially non-parallel and are mutually inclined. This allows producing filter housings and filter assemblies with reduced size without affecting their efficiency. The invention further relates to the filter housing for that cartridge and the filter assembly equipped with that cartridge.

## Description

### Field of the invention

The present invention relates to a filter cartridge, a filter housing and the filter assembly formed by said cartridge inserted in said housing.

### State of the art

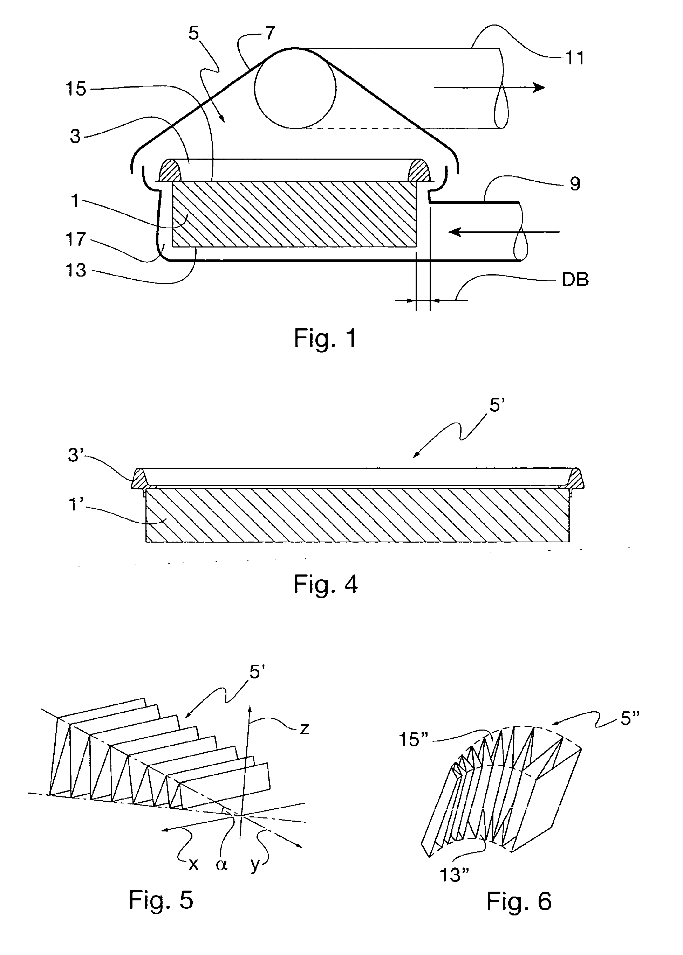

It is currently known to produce air filters for internal-combustion engines by accordion-folding a sheet of filtering material such as paper, felt or non-woven fabric, thereby obtaining a filtering element 1 having more or less a parallelepiped shape (Fig. 1). Filtering element 1, equipped with suitable sealing gaskets 3, for instance of foam rubber, forms an assembly 5 generally referred to as "cartridge" or "filter cartridge". In use, filter cartridge 5 is inserted into a filter housing 7, which is a more or less sealed housing connected to an inlet duct 9 and a delivery duct 11 through which air to be filtered is fed to cartridge 5 and filtered air leaves cartridge 5, respectively.

If, due to the space availability in the engine compartment of a motor car, it is desired that filter housing 7 has a size as small as possible, and inlet duct 9 is to be attached to one side of the housing, or generally with a very small inclination with respect to (or almost in the same plane as) upstream and downstream walls 13, 15 of filtering element 1, the designer could be compelled to make duct 9 directly end on one side of filtering element 1, as shown in Fig. 1. Distance DB between the inlet duct mouth and the side wall of filtering element 1 could be too small to allow a sufficient air distribution into upstream chamber 17 of the filter housing, and could instead result in a higher pressure loss and a greater turbulence in upstream chamber 17 and consequently in a reduced filtering capacity for given features of cartridge 5.

It is a first object of the present invention to provide a filter cartridge allowing making less bulky filter housings.

It is a second object of the present invention to provide an assembly of a filter cartridge and a filter housing having smaller external sizes than the prior art filter cartridge - filter housing assemblies.

### Summary of the invention

According to a first aspect of the present invention, the above object is achieved by means of a filter cartridge having the features as claimed in claim 1.

According to a second aspect of the present invention, the above object is achieved by means of a filter housing having the features as claimed in claim 7.

According to a third aspect of the present invention, the above object is achieved by means of a filter housing having the features as claimed in claim 8.

According to a fourth aspect of the present invention, the above object is achieved by means of a filter assembly having the features as claimed in claim 14.

The advantages afforded by the present invention will become more apparent, to the skilled in the art, from the following detailed description of some particular and non-limiting exemplary embodiments, given with reference to the following schematic Figures.

### List of the Figures

Fig. 1 is a cross-sectional view of a filter cartridge - filter housing assembly, in which the filter cartridge is of known type;
Fig. 2 is a cross-sectional view of a filter cartridge - filter housing assembly in accordance with a first embodiment of the present invention, taken along plane A - A;
Fig. 3 is a perspective view of the filter cartridge of the assembly shown in Fig. 2;
Fig. 4 is a cross-sectional view of the filter cartridge shown in Fig. 3, taken along plane B - B;
Fig. 5 is a perspective view of a detail of the accordion folding of the filtering paper of the filter cartridge shown in Fig. 3;
Fig. 6 is a perspective view of a filter cartridge in accordance with a second embodiment of the present invention.

### Detailed description

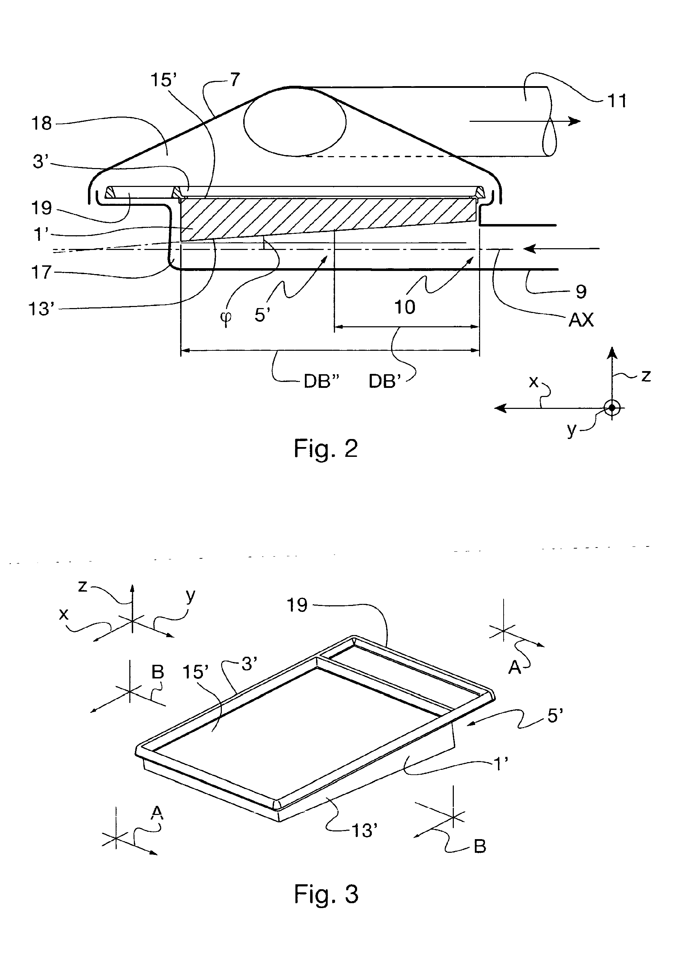

Figs. 2 to 4 show a filter assembly in accordance with a peculiar embodiment of the present invention. In such Figures, reference symbols x, y and z denote three orthogonal reference Cartesian axes. Such filter assembly includes a filter housing 7 and a filter cartridge 5' mounted in filter housing 7. More particularly, filter cartridge 5' is mounted in and kept in place by a suitable seat formed in filter housing 7.

Filter housing 7 and cartridge 5' housed therein define two internal cavities in the same filter housing, namely an upstream chamber 17 and a downstream chamber 18, separated by filter cartridge 5'. Air, or other fluid, yet to be filtered accumulates in upstream chamber 17, whereas air, or other fluid, already filtered accumulates in downstream chamber 18, which is separated from upstream chamber 17 by filter cartridge 5'. Air to be filtered arrives at upstream chamber 17 through inlet duct 9 and is evacuated from downstream chamber 18 through delivery duct 11 (Fig. 2). Filter cartridge 5' includes a filtering element 1', which can be formed for instance by accordion-folding, or zigzag folding, a sheet of a suitable filtering material, such as paper or non-woven fabric, as shown in Fig. 5.

Anyway, clearly the filtering element can even be of a different kind, for instance of the kind disclosed in patent application WO 83/01582 or in US patent 2,599,604. Such filtering elements comprise a set of layers superimposed so as to form a roll or a prismatic pack. Such layers are formed by alternating one sheet of a substantially smooth filtering material, e.g. paper, with one sheet of a substantially corrugated filtering material, so as to form a plurality of channels. Each channel has one closed end only and one open end only, and the open and closed ends alternate in succession (i.e. giving rise to a succession closed-open-closed-open...) on the filter upstream and downstream faces, along the edges of said superimposed layers.

In the embodiments shown in Figs. 2 to 4, filter cartridge 5' further includes a substantially rigid frame 3', e.g. made of plastics, surrounding the perimeter of downstream face 15'.

By «upstream face 13'» and «downstream face 15'» two faces, or generally two surfaces, of filtering element 1' are meant, which are mutually opposed and are arranged to face upstream chamber 17 and downstream chamber 18, respectively, when filter cartridge 5' is mounted into filter housing 7 for use. In the present exemplary embodiment, the filter is substantially flattened and upstream and downstream faces 13' and 15' correspond to the filter faces with the greatest areas.

According to an aspect of the invention, upstream and downstream faces 13' and 15' substantially are non-parallel. More particularly, in the embodiment shown in Figs. 2 to 5, upstream and downstream faces 13' and 15' are substantially inclined relative to each other. Still more particularly, filtering element 1' is substantially wedge shaped.

The inclination of upstream and downstream faces 13' and 15' of filtering element 1' allows interposing a larger gap between mouth 10 of inlet duct 9 and filtering element 1' itself, thereby reducing pressure losses and turbulence, notwithstanding the reduced external size of filter housing 7. More generally, filter housing 7 according to the invention is so arranged that, when filter cartridge 5' is mounted in filter housing 7 for use, axial distances DB', DB" between inlet mouth 10 and the filter cartridge surfaces facing said mouth, measured in the direction of axis AX of inlet duct 9, are equal to or greater than half the maximum width of inlet mouth 10 (Fig. 2).

This allows therefore manufacturing more efficient filter housings and filter assemblies notwithstanding the reduced size or, equivalently, filter assemblies with a greater amount of filtering material, and hence a greater filtering capacity and a greater capacity of accumulating filtered particulate, for a given external size. More particularly, in the embodiment shown in Figs. 2 to 5, upstream face 13' of filtering element 1' and the walls of upstream chamber 17 form a duct whose cross-sectional size progressively decreases along the path of air flowing into the filter assembly. In other embodiments, not shown, upstream face 13' of filtering element 1' and the walls of upstream chamber 17 can more generally form a duct whose cross-sectional size varies along the path of air flowing into the filter assembly.

Preferably, dihedral angle α of the inclination between upstream and downstream faces 13' and 15' is in the range from about 1° to about 45°.More preferably, angle α is in the range from about 1° to about 12°, and most preferably in the range from about 1° to about 6°. In the illustrated exemplary embodiment, angle α is about 3.5°.

In the present exemplary embodiment, filtering element 1' is substantially prism shaped, such that only upstream and downstream faces 13' and 15' are mutually inclined whereas the other faces are plane and two by two parallel. Clearly, in other embodiments, the filtering element can have also multiple pairs of mutually inclined and non-parallel opposite faces, and have for instance the shape of a frustum of pyramid or cone. Moreover, the upstream and downstream faces could even be non-planar.

The inclination of upstream and downstream faces 13' and 15' of filtering element 1' allows in particular manufacturing filter housings where inlet duct 9 is connected with a relatively small inclination angle ϕ (Fig. 2) relative to upstream face 13' of filtering element 1', thereby limiting the size of the assembly formed by the filter housing and the inlet duct and making installation of the assembly in the engine compartment easier.

Inclination angle ϕ between upstream face 13' and inlet duct 9 is measured in the direction of axis AX of inlet duct 9 in the duct section located immediately upstream filter housing 7 and preferably it is 45° or less. More preferably, inclination angle ϕ is 15° or less.

Advantageously, in order to limit the size of the assembly of filter housing 7 and inlet duct 9, the axis of inlet duct 9 in the duct section located immediately upstream filter housing 7 may lie in a plane parallel to downstream face 15' of filtering element 1'.

Turning back to the description of the embodiment shown in Figs. 2 to 4, advantageously frame 3' further forms a substantially rigid handle 19 that, in the present embodiment, has the shape of a closed handle, in order cartridge 5' can be more easily removed from and inserted into filter housing 7.

Several changes and modifications of the exemplary embodiments described above are possible without departing from the scope of the invention. For instance, in the embodiment shown in Fig. 6, upstream and downstream faces 13" and 15" of filtering element 5" are curved instead of being plane as in the embodiment shown in Figs. 2 to 5. That is, filtering element 5" is shaped as a curved wedge. The upstream and downstream faces of a filtering element can not only form a dihedral angle, but they can generally be mutually skew. The examples and the lists of possible variations in the present application are to be intended as non-exhaustive lists.

## Claims

1. A filter cartridge (5') arranged to be inserted, for use, into a filter housing (7), wherein:
- the filter cartridge (5') includes a filtering element (1') arranged to filter a predetermined fluid passing therethrough;
- the filtering element has substantially the shape of a block externally defining mutually opposite upstream and downstream faces (13', 15');
- the filter housing (7) and the filtering element (1') inserted therein define a downstream chamber (18), where fluid having already been filtered is contained, and an upstream chamber (17), where fluid yet to be filtered is contained;
- the filtering element (1') is arranged to separate the upstream chamber (17) from the downstream chamber (18) when it is inserted, for use, into the filter housing (7);
- the upstream face (13') is arranged to face the upstream chamber (17) and the downstream face (15') is arranged to face the downstream chamber (18) when the filter cartridge (5') is inserted, for use, into the filter housing (7);
**characterised in that** the upstream and downstream faces (13', 15') are substantially mutually non-parallel.

2. The filter cartridge as claimed in claim 1, wherein the upstream and downstream faces (13', 15') are substantially mutually inclined.

3. The filter cartridge as claimed in claim 1, wherein the filtering element is substantially wedge shaped.

4. The filter cartridge as claimed in one or more of the previous claims, wherein the upstream and downstream faces (13', 15') are substantially planar and are inclined so as to form a dihedral angle (α) in the range 1° to 45°.

5. The filter cartridge as claimed in claim 4, wherein the upstream and downstream faces (13', 15') are inclined so as to form a dihedral angle (α) in the range 1° to 12°.

6. The filter cartridge as claimed in one or more of the previous claims, wherein the filtering element comprises one or more sheets of accordion-folded filtering material.

7. A filter housing (7) comprising:
- a filter seat arranged to accommodate and keep in place during use a filter cartridge (5') as claimed in one or more of the previous claims;
- an inlet duct (9) ending into the filter seat where it defines an inlet mouth (10);
wherein the filter housing (7) is so arranged that, when the filter cartridge (5') is inserted in the filter seat for use, the axial distances (DB', DB") between the inlet mouth (10) and the filter cartridge surfaces facing said mouth (10), measured in the direction of the axis (AX) of the inlet duct (9), are equal to or greater than half the maximum width of the inlet mouth (10).

8. A filter housing (7) comprising:
- a filter seat arranged to accommodate and keep in place during use a filter cartridge (5') as claimed in one or more of claims 1 to 6;
- an inlet duct (9);
wherein the filter housing (7) is arranged to form, together with the filter cartridge (5') inserted in the filter seat for use, an upstream chamber (17) containing fluid yet to be filtered coming from the inlet duct (9), and a downstream chamber (18) containing fluid that has been already filtered, and wherein the upstream chamber (17) substantially forms a duct whose cross-sectional size varies along the path of the fluid flowing through the filter housing.

9. The filter housing (7) as claimed in claim 8, wherein the upstream chamber (17) substantially forms a duct whose cross-sectional size progressively decreases along the path of the fluid flowing through the filter housing.

10. The filter housing (7) as claimed in claim 8 or 9, arranged so that, when a filter cartridge as claimed in one or more of claims 1 to 6 is inserted in the filter seat during use, the inlet duct (9) ends into the upstream chamber (17) and faces the upstream face (13') of the filtering element (1'), and the axis (AX) of the inlet duct (9), in the end portion of said duct (9) proximal to the filtering element, is substantially inclined relative to the upstream face (13').

11. The filter housing (7) as claimed in claim 10, wherein the axis (AX) of the inlet duct (9), in the end portion of said duct (9) proximal to the filtering element, has an inclination (ϕ), relative to the upstream face (13'), which is substantially smaller than or equal to 45 degrees.

12. The filter housing (7) as claimed in claim 11, wherein the axis (AX) of the inlet duct (9), in the end portion of said duct (9) proximal to the filtering element, has an inclination (ϕ), relative to the upstream face (13'), which is substantially smaller than or equal to 15 degrees.

13. The filter housing (7) as claimed in one or more of claim 8 to 12, wherein the axis (AX) of the inlet duct (9), in the end portion of said duct (9) proximal to the filtering element, lies in a plane parallel to the plane of the downstream face (15') of the filtering element (1').

14. A filter assembly, comprising a filter cartridge (5') as claimed in one or more of claims 1 to 6 and a filter housing (7) as claimed in one or more of claims 7 to 13:
